# EUROPEAN PATENT APPLICATION

(11) **EP 4 794 331 A1**
(43) Date of publication of application: **19.08.2026**
(21) Application number: 26157865.2
(22) Date of filing: 11.02.2026
(51) Int. Cl.: H04N 19/136, H04N 19/167, H04N 19/17

(54) **CODEC SYSTEM AND METHOD**

(30) Priority: 13.02.2025 GB 202502138
(71) Applicant: Sony Interactive Entertainment Inc., Tokyo 108-0075 (JP)
(72) Inventor: CURRIUS, Roc Ramon, London, W1F 7LP (GB); GUPTA, Rajeev, London, W1F 7LP (GB)
(74) Representative: D Young & Co LLP

(57) **Abstract**

A method of image encoding comprises the steps of during a rendering process for an image, detecting at least a first region within the image having at least a first predetermined property; logging that predetermined property using a respective predetermined reserved value within a corresponding region of an alpha channel associated with the image; and encoding the image, wherein the step of encoding the image comprises, for at least a first region within the image, using one or more encoder settings selected in response to a predetermined reserved value in the corresponding region of the alpha channel.

## Description

### BACKGROUND OF THE INVENTION

### Field of the invention

The present invention relates to a codec system and method.

### Description of the Prior Art

In video streaming, codecs are generally optimised to provide efficient encoding of real world imagery. The codecs are designed to preserve features of this imagery to result in a visually faithful reproduction by the receiver, where the decoded image is identical or very similar, and/or where errors in the image are visually unobtrusive.

For videogames, game streaming has gained popularity as the games themselves have tended towards graphics that look photorealistic and hence similar to real world imagery; indeed one motivation for streaming a game is that such graphics require a significant computational overhead that may not be available to all client devices, in particular portable ones.

However, in some circumstances videogame graphics can result in an existing codec performing in a suboptimal manner.

The present invention seeks to mitigate or alleviate this problem.

### SUMMARY OF THE INVENTION

Various aspects and features of the present invention are defined in the appended claims and within the text of the accompanying description.

In a first aspect, a method of image encoding is provided in accordance with claim 1.

In another aspect, an encoded image is provided in accordance with claim 11.

In another aspect, a method of image decoding is provided in accordance with claim 13.

In another aspect, a server is provided in accordance with claim 15.

In another aspect, a client is provided in accordance with claim 16.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device in accordance with embodiments of the present description.
- Figure 2 is a schematic diagram of an image with accessibility modifications in accordance with embodiments of the present description.
- Figure 3A is a schematic diagram of an image with increasingly severe encoding artefacts.
- Figure 3B is a schematic diagram illustrating an encoding artefact.
- Figure 3C is a schematic diagram of Fourier synthesis of a square wave.
- Figure 4 is a schematic diagram of a rendering pipeline in accordance with embodiments of the present description.
- Figure 5 is a flow diagram of a method of image encoding in accordance with embodiments of the present description.
- Figure 6 is a flow diagram of a method of image decoding in accordance with embodiments of the present description.

### DESCRIPTION OF THE EMBODIMENTS

A codec system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

### Hardware

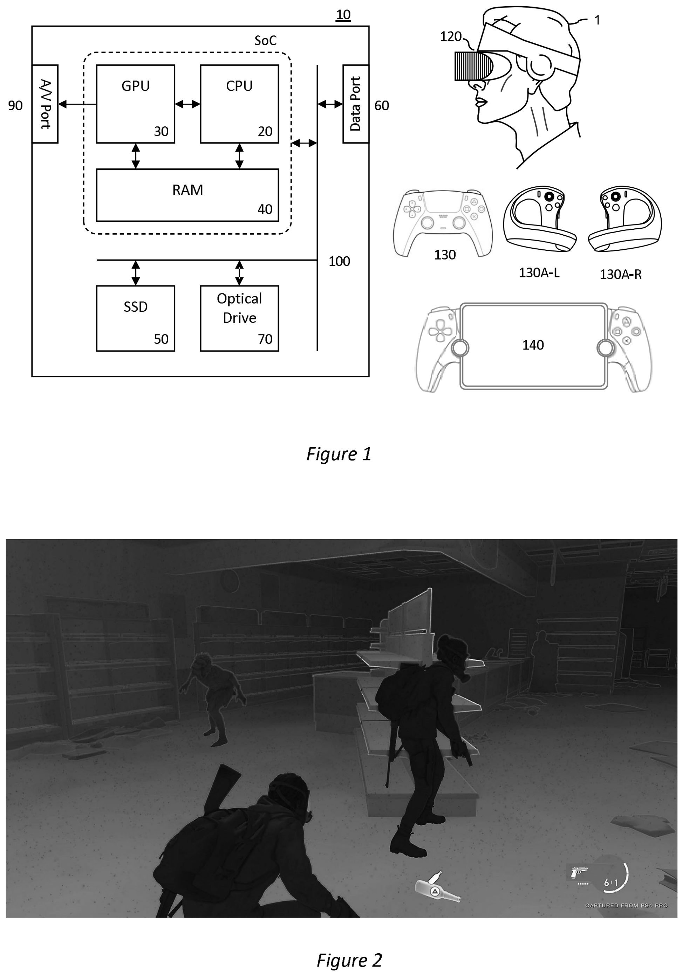

Referring now to the drawings, wherein like reference numerals designate identical or corresponding parts throughout the several views, Figure 1 shows an example of an entertainment system 10 such as a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

Examples of a device for displaying images output by the entertainment system include a head mounted display 'HMD' 120 worn by a user 1, a TV (not shown), and a portable screen 140.

Interaction with the system is typically provided using one or more handheld controllers 130, 140, and/or one or more VR controllers (130A-L,R) in the case of the HMD.

The entertainment device is representative of either a server or a client, depending on how it is configured by suitable software instruction. In the case of a client device, optionally the inputs and display may be integral to the entertainment device, as in the case of a hand-held console, tablet, or smartphone or the like.

### Encoding mixed feature images

As noted previously, most common streaming codecs provide efficient encoding of real-world imagery. Whilst some videogame graphics are similar to real-world imagery, others are not; typically these are brightly coloured, cartoon-like graphics, and/or blocky 'pixel art' graphics. However, such imagery is typically simpler in terms of information content than real-world images or photoreal graphics, for example having a smaller colour palette in a given image, which makes quantisation easier, and also does less to penalise an image that includes and retains high contrast edges. As such, counter-intuitively these images can often also be encoded reasonably well by existing codecs.

By contrast, there is a problem where an image comprises both photoreal components and also cartoony or more generally non-photoreal components, as these tend to have competing requirements. For example the colour gradients in the photoreal parts that need to be captured might not be required in the non-photoreal parts, whilst changes in contrast in the non-photoreal parts may not occur in the photoreal parts. Depending on which part of the image the codec accommodates, there may either be redundancy in the encoded image where data fidelity is not required, or a reduction in quality where data is not preserved.

Notably, photoreal images can be modified (or generated) to have non-photoreal parts where the image has been produced to accommodate an accessibility issue, typically to assist with a visual disability.

Turning to Figure 2, this is an example of a game where key parts of an image have been given a block-colour overlay to provide a high-contrast view that helps visually impaired users identify friend from foe. It will be appreciated that the rest of the image may still have photoreal colour gradients and boundaries, and indeed within one remaining colour channel (for example blue or red) the block coloured elements may also still have their original colour gradients and boundaries; however the edge transitions from photoreal to blue-only or red-only image elements (for example) is not normally found in real-world imagery and is likely to be poorly encoded. Similarly the codec representation of the image in the block-coloured region is likely to either contain significant redundancy in unused colour channels or the image as a whole is likely to have a reduced quality if a global compromise is sought.

It will be appreciated that the example in figure 2 is not the only type of non-photoreal alteration that can occur in an accessible image generation scheme.

Other examples include placing a high contrast boundary or halo around key parts of the game (e.g. the protagonist, antagonist, quest-essential items and the like); or high contrast overlays, for example indicating sound sources in the game (e.g. concentric circles or arcs); where the player's weapon is aiming (e.g. a reticule); what elements of the scene are interactive (e.g. using interaction icons); where the player can go (e.g. arrows or path lines); or the like.

In addition, any text or other information such as subtitles or a so-called heads-up display may be made larger or be given a higher contrast than the default.

However as noted elsewhere herein, many codecs including but not limited to frequency-domain based codecs such as mpeg, h.264 and the like, can impact on high contrast image features if configured to work with realistic imagery. Hence there is a tension when the image contains both elements.

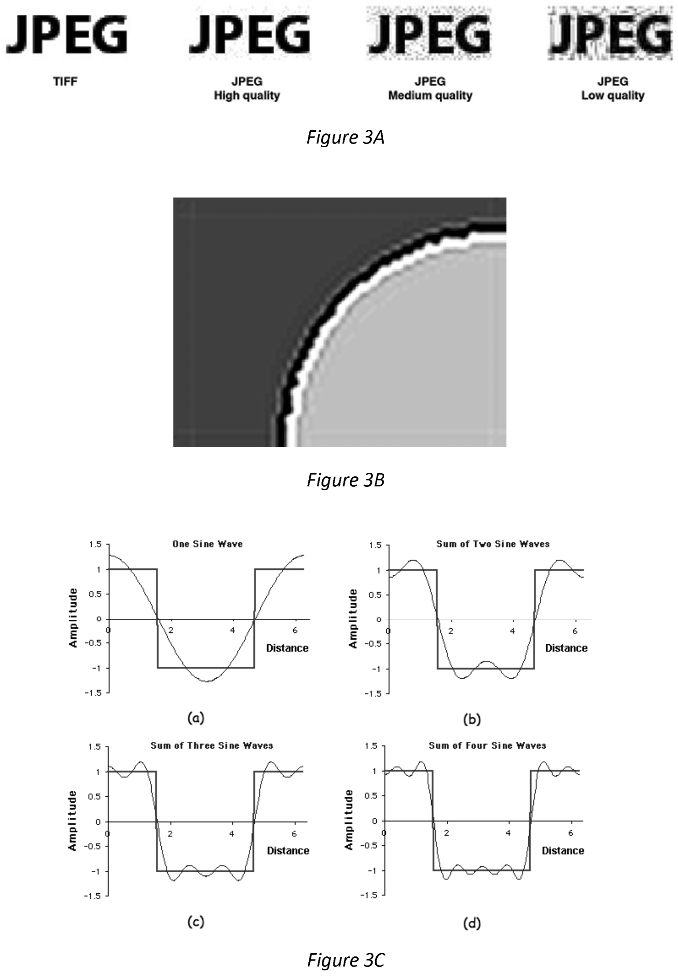

As non-limiting examples, Figures 3A - 3C illustrate the effect of compression in JPEG images, as a static example of a frequency domain based compression scheme.

Figure 3A show a lossless source image (TIFF format) and three successive JPEG images of lower quality (i.e. with more frequency components dropped or heavily quantised). More artefacts appear around the high-contrast text as the quality reduces and the compression increases.

The reason for this is illustrated in Figure 3B as the so-called ringing effect of JPEG compression; a high contrast border or discontinuity in an image produces peaks and troughs around it.

Referring to Figure 3C, this is because the image is synthesised from a superposition of sinusoids with respective frequencies and amplitudes defined in the JPEG (e.g. Fourier synthesis) - but when some sinusoids are lost or simplified by reducing image quality / increasing compression, they no longer provide sufficiently exact (e.g. pixel or sub-pixel accurate) cancelling interference to suppress all the sinusoids contributing to the high contrast border. Hence if some of the frequencies contributing to a hard boundary (such as in the square wave of Figure 3C) are removed or altered, the remaining frequencies will not properly cancel out on either side of it, creating the ripples seen in Figure 3B and the more complex interference patterns seen in Figure 3A.

It will be appreciated that other aspects of image compression can have similar impacts on image quality, whether they relate to colour depth, quantisation, encoding block size or placement, and the like. Typically in all these cases there is again a tension between photoreal features and non-photoreal features in the same image because compression techniques and levels that are fine for colour and brightness gradients are less so for colour and brightness discontinuities.

Hence more generally, where an accessibility feature modifies an image in a manner that introduces colour or brightness discontinuities or features that respond to a given encoding scheme differently to more photoreal image features in the image, there is scope for the encoding of the image to be suboptimal.

### Accessibility aware encoding

Accordingly, in embodiments of the present description, an method of accessibility -aware encoding is provided - or more generally, image feature aware encoding.

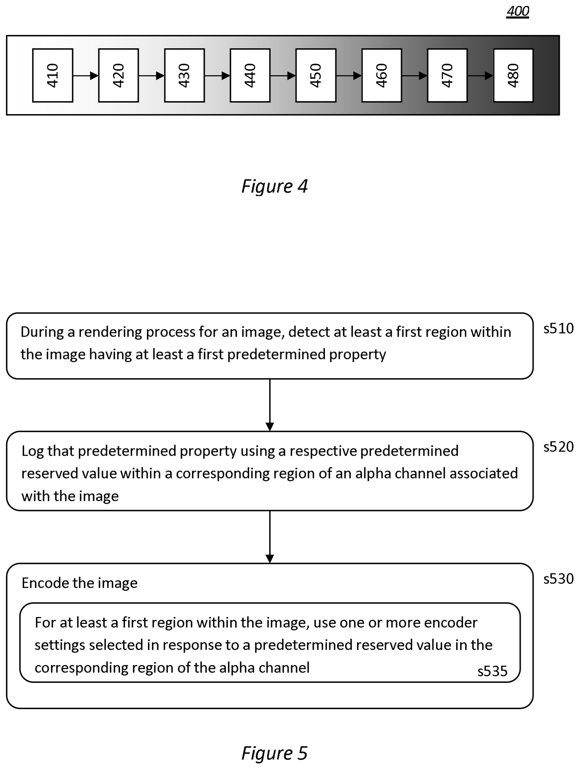

Referring now to Figure 4, when executing a videogame (or any application with a graphical output), then after the game logic (game state) has been updated to reflect the current situation in-game that is to be depicted in the image, a rendering pipeline 400 comprises some or all of the following (and potentially other steps not included here), in roughly, but not necessarily, the order given below.

### Camera update (410)

- The position and/or orientation of the virtual camera within the environment may change, for example in response to movement of the player's character and either an automatic tracking camera (in the case of so-called third-person games) or motion and directional input (in the case of so-called first person games). Meanwhile some games have a fixed camera (e.g. 2D platform games) and so this update is skipped or a minimal process.

### Geometry update (420)

- The geometry of the environment to be rendered may be updated if there are new elements to show, or if elements have changed. Similarly, changes in character animation/pose geometry may be defined/updated.

### Z-buffer update (430)

- What aspects of the environment are visible is updated depending on the geometry and the virtual camera viewpoint - parts that are unseen need not be processed, or only processed to a limited extent.

### Texturing (440)

- Texture maps are used to apply basic graphical imagery to the geometry of the scene. Typically different textures are used as a function of distance from the viewpoint.

### Static Lighting (450)

- Lightmaps may be used for direct and indirect lighting, shadows, and reflections.

### Dynamic lighting (460)

- Direct and indirect lighting, shadows, and reflections may be computed for dynamic in-game light sources such as a player's torch.

### Atmospherics (470)

- Effects such as mist or fog, particle effects, translucency (water) and the like.

### Post processing (480)

- A variety of effects that may be applied, often to the image as a whole, including bloom, exposure, depth of field bokeh, lens effects, and the like.

### Upscaling (490)

- If, in order to achieve a preferred frame rate, the rendering has been performed at a lower resolution than intended, some systems have a machine learning based Al upscaling step to in-paint the rendered image up to the target resolution. Optionally this step may be implemented at the client device, after receiving a lower resolution version of the image in the stream.

Whilst these stages are illustrated at equal size in Figure 4, in practice some stages take longer than others or are more complex, and some may overlap or be revisited during the rendering process. Similarly, as noted above some stages may occur in a different order to that listed. However, in general the image is formed using successive stages.

The image itself typically comprises three colour channels (RGB - red, green, and blue), although other colour spaces are possible. Notably, at least during rendering the image or the interim stages contributing to the image, in addition to the colour channel a further channel exists - transparency (known as the alpha channel).

This channel typically is not part of the final image, and is not encoded for streaming. It is used by the rendering pipeline to detect if elements in the scene are fully transparent, partially transparent, or opaque, and consequently if elements in the scene behind them need to be rendered or not in some manner, and typically also how lighting interacts with these elements.

Typically the alpha channel is 8-bit (e.g. providing 256 levels of transparency).

The alpha channel may be the same resolution as the RGB image, or may be at a lower resolution (e.g. 1 alpha pixel for 2x2, 3x3, or 4x4 image pixels).

In embodiments of the present description, reserved values are added to the alpha channel. Hence as a non-limiting example, instead of having 256 levels of transparency spanning the range from fully opaque to fully transparent, the alpha channel may be interpreted as having 248 levels of transparency spanning the range from fully opaque to fully transparent (with little visual impact versus having 256). This leaves 8 reserved values to be used as described later herein. The example number of reserved values is non-limiting and may be as few as 1 and as many as 128, for example. The reserve values are typically in the form of a bit-pattern; for example 8 values can occupy the lowest 3 bits of the alpha channel, whilst any transparency value can occupy the remaining bits. In this way, a given pixel or region can be provided with both an alpha/transparency value and a reserve value at the same time.

The reserve values may be used to flag the presence of an accessibility feature, non-photoreal feature, or more generally a feature that responds differently to encoding than a notional default or majority feature type (e.g. outside an empirically determined encoding performance envelope). Hence a single value could be used to flag the position of features that may require different encoder settings, such as colour or contrast discontinuities.

The use of more reserved values enables the indication of different types of feature in the image and hence potentially different encoder settings better suited to the properties of the respective feature.

These one or more values may be updated at one or more relevant steps in the rendering pipeline described above. Hence for example if colour is simplified at the texture stage, a reserved alpha value may be added to the relevant region with the simplified texture at that stage. Meanwhile if it is simplified as a post-processing effect, the reserved alpha value may be added to the relevant region at this later stage. In this way, a map of alterations to the image, or more generally a map of properties of the image relevant to settings or options of the encoder, is created in the alpha channel.

The alpha channel may be updated using any suitable approach. Hence for example when an accessibility flag has been turned on that changes an element of the rendering pipeline, there will be a change in an aspect of that element of the pipeline (e.g. a conditional fetch of an asset for an overlay or adapted texture, or a conditional change in colour in post-processing. That alternate path can include the instruction to update a relevant reserved value in the alpha channel for the pixel/region of the image being processed at that point. Hence more generally the game engine can be configured to log changes to the default render of an image within its alpha channel.

Hence for example referring again to Figure 2, regions comprising a colour block could be identified as such and encoded without seeking to preserve accurate values in unused (or minimally used) colour channels. Meanwhile regions with brightness or luminance discontinuities (i.e. high contrast boundaries) could similarly be identified as such, and higher frequency components of the encoded data in those regions could be preferentially retained to improve the image quality for discontinuities in those regions.

Different image features may benefit from different changes to resource allocation between channels, levels of value quantisation, colour depth, frequency component retention or discarding, and the like, and these can be identified using the reserved values in the alpha channel, thereby forming a encoding configuration map for the image.

Notably because the alpha channel is treated like another image channel in the rendering pipeline and in hardware, it can be provided to the encoder efficiently in parallel with the other colour channels, limiting the overhead associated with the scheme.

Hence in summary, in addition to the channels of the image that are encoded by the encoder, a further channel of the image (the alpha channel) is modified to have one or more reserve values that are used to log changes to the default render of an image and thereby form a map of image regions that may benefit from different encoder settings or options. A typical but not exclusive use-case for this is when an image is modified in response to one or more accessibility settings in a game.

The above approach need not be limited to accessibility settings, or specifically to changes from a default rendering of an image; an image rendered using a default pipeline may still contain regions that would benefit from different encoder settings or options.

For example, reserve values for the alpha channel may indicate an area of interest or salience in the image (e.g. the region corresponding to the player avatar, a gun reticule (or the object it is pointing at), a non-player character who is talking or interacting with the player, faces of on-screen characters, or the like.

Similarly, reserve values for the alpha channel may indicate a gaze / fovea region (for example in the case of VR or other gaze-tracking systems).

Similarly, reserve values for the alpha channel may indicate the nature of an image region; e.g. animation/motion optionally above a predetermined inter-frame threshold, live action / photo, rendered, with or without post processing or a particular type thereof, and the like), which as noted above may affect the encoding settings that work best.

Similarly, the intended nature of an image region may relate to the image content; for example foggy, low-detail / low lighting / background, comprising deliberate motion blur, and the like.

Similarly, reserve values for the alpha channel may indicate whether an image region differs from the corresponding previous image region by more than a threshold amount (optionally either accounting for motion correction or not), and hence has potentially high entropy / encoding cost or inter-frame encoding.

Similarly, reserve values for the alpha channel may indicate whether a corresponding previous image region was rendered poorly (e.g. at the client device or during a trail decoding step at the streaming server) and hence may benefit from more encoding resource / higher quality encoding.

Similarly, reserve values for the alpha channel may indicate whether an image region has been encoded at a low quality either because it has previously been encoded at a low quality (e.g. because other image elements require more of a limited bandwidth budget) or because it is not considered essential to have a high quality output (for example at a periphery of an image, or more than a threshold distance from an object of interest / gaze position, and the like).

Hence in summary, the alpha channel may alternatively or in addition be modified to have one or more reserve values that are used to log properties of one or more regions the rendered image such as those listed above and thereby form a map of image regions that may benefit from different encoder settings or options.

### Variant embodiments

Whilst the alpha channel can be treated in a similar manner other colour channels during rendering, and can retain its original function of defining transparency (albeit at a coarser granularity due to the parallel existence of reserved values) it is not normally encoded as part of the final image - it's transparency information is used in the rendering of the image, but not required as part of the image itself.

However, in some embodiments, changes to encoder settings made in response to information from reserved values on the alpha channel may require corresponding changes to decoder settings at the client end.

In some cases, changes to encoder settings result in encoded data having intrinsic properties that allow the decoder to make suitable corresponding decoder setting changes, and so no alterations are required.

However, where these settings are normally for the whole image, or where the encoded data within regions of the image does not enable determination of the appropriate corresponding decoder settings (where corresponding decoder settings are needed/preferred to obtain good image results) then an alternative may be considered.

In this case, a subset of reserved values that result in this problem may be mapped down to a smaller set of values (e.g. if 3 out of 16 values result in this, then these three may be mapped to two bits). The mapped values may then be included in any suitable manner, for example as metadata, in custom or spare fields in the data payload, or as least significant bits in one or more colour channels of one or more pixels in a given region.

It will be appreciated that if a reserved value may sometimes, but not always, result in this issue, then the mapped value may only be included for a region when the relevant encoder / decoder settings are required.

Hence in summary, where the effect of a reserved value for an image region is to modify the encoding process so that the decoder would benefit from a corresponding change in settings, and this is not normally apparent from the encoded image or the stream it is in, then an indication of the reserved value may be included for that image region (e.g. a mapped subset of such values, or one or more flags as needed) so that the decoder can make the required changes to its settings.

### Summary

Referring now to Figure 5, in a summary embodiment of the present description, a method of image encoding, comprises the following steps.

In a first step s510, during a rendering process for an image, detecting at least a first region within the image having at least a first predetermined property (e.g. a modification due to accessibility, or an image property such as comprising motion or the like), as described elsewhere herein;

In a second step s520, logging that predetermined property using a respective predetermined reserved value within a corresponding region of an alpha channel associated with the image (e.g. to thereby form a map of predetermined properties in the alpha channel image), as described elsewhere herein; and

In a third step s530 encoding the image as described elsewhere herein, wherein the step of encoding the image comprises, for at least a first region within the image, in a sub-step s535 using one or more encoder settings selected in response to a predetermined reserved value in the corresponding region of the alpha channel, as described elsewhere herein.

It will be apparent to a person skilled in the art that variations in the above method corresponding to operation of the various embodiments of the apparatus as described and claimed herein are considered within the scope of the present invention, including but not limited to that:
- the step of encoding the image is improved for the at least a first region within the image by using one or more selected encoder settings other than default encoder settings initially provided for the image, as described elsewhere herein;
- the or each predetermined property relates to a respective image modification that responds differently to encoding than a default or majority image feature type, as described elsewhere herein;
- the or each predetermined property relates to a respective image modification made in response to a user accessibility requirement, as described elsewhere herein;
   - in this case, optionally the predetermined property relates to one or more selected from the list consisting of the range of values in at least a first colour channel being reduced (e.g. to be predominantly shades of a single colour); a colour range or gamut is altered (e.g. posterised or otherwise reduced to s simpler/smaller colour scheme), a discontinuity in colour (e.g. where a single colour region starts or ends), a discontinuity in brightness (e.g. where an information overlay is found), a discontinuity in contrast (e.g. due to a high contrast halo or boundary around an object), and an accessibility indicator, as described elsewhere herein;
- one or more predetermined properties relates to a respective property of an image amongst one or more selected from the list consisting of a region of interest or salience in an image (e.g. due to a predetermined object such as the player avatar, or a particular feature such as a face or a face being animated for speech), and a region being gazed at by a user, as described elsewhere herein;
- one or more predetermined properties relates to a respective property of an image amongst one or more selected from the list consisting of being rendered, being sourced from a real-world image, being animated or in motion, an inter-image difference of pixel values while not accounting for inter-image motion, and an inter-image difference of pixel values while accounting for inter-image motion, as described elsewhere herein;
- one or more predetermined properties relates to a respective property of an image amongst one or more selected from the list consisting of the quality of the image region upon decoding, and an intended degradation of image quality, as described elsewhere herein;
- an image region comprises one or more selected from the list consisting of a region corresponding to an encoding block (e.g. a tile processed by an encoder, such as a macroblock), a set of one or more pixels that corresponds to one alpha channel pixel (e.g. the smallest region that can be represented as such by the alpha channel, or a region defined from a predetermined number / arrangement of these), an object depicted in the image (e.g. defined as such during the rendering process), and a region corresponding to a modification, as described elsewhere herein; and
- the step of encoding the image comprises incorporating within the encoded image data, for one or more regions, one or more predetermined indicators of selectable changes to decoder settings, as described elsewhere herein.

The result of the encoding method is an image encoded according to the method or the variations as described elsewhere herein. Optionally, an encoded image may incorporate therein for one or more regions one or more predetermined indicators of selectable changes to decoder settings, again as described elsewhere herein.

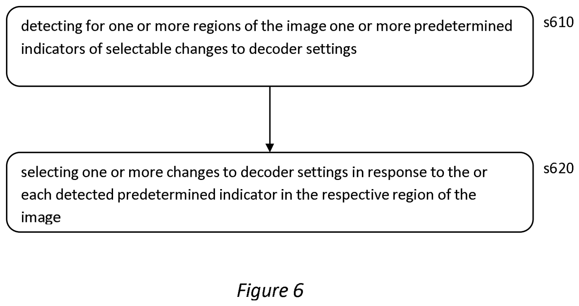

Subsequently, and referring now to Figure 6, in a summary embodiment of the description a method of image decoding comprises the following steps.

In a first step s610, detect for one or more regions of the image one or more predetermined indicators of selectable changes to decoder settings, as described elsewhere herein; and

In a second step s620, select one or more changes to decoder settings in response to the or each detected predetermined indicator in the respective region of the image, as described elsewhere herein.

This enables default operation of the decoder to be modified for individual regions if the encoder settings selected for that region would benefit from corresponding changes to decoder settings at the decoder.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description a server (e.g. entertainment device 10 operating in such a role), comprises the following: a renderer (e.g. CPU 20 and/or GPU 30, operating under suitable software instruction) for rendering an image; a detection processor (e.g. CPU 20) configured (for example by suitable software instruction) to detect, during the rendering of the image, at least a first region within the image having at least a first predetermined property; a logging processor (e.g. CPU 20) configured (for example by suitable software instruction) to log that predetermined property using a respective predetermined reserved value within a corresponding region of an alpha channel associated with the image; and an encoder (e.g. CPU 20 and/or GPU 30) configured (for example by suitable software instruction) to encode the image, wherein the encoder is configured (for example by suitable software instruction) to, for at least a first region within the image, use one or more encoder settings selected in response to a predetermined reserved value in the corresponding region of the alpha channel, as described elsewhere herein.

Instances of this summary embodiment implementing the methods and techniques described herein (for example by use of suitable software instruction) are similarly envisaged within the scope of the application to those of the corresponding summary method.

Similarly, and again referring to Figure 1, in a summary embodiment of the present description a client device (e.g. entertainment device 10 operating in such a role), comprises the following: receiver (e.g. data port 60) configured to receive an encoded image; a detection processor (e.g. CPU 20) configured (for example by suitable software instruction) to detect, for one or more regions of the encoded image, one or more predetermined indicators of selectable changes to decoder settings; a decoder (e.g. CPU 20 and/or GPU 30), configured (for example by suitable software instruction) to select one or more changes to decoder settings in response to the or each detected predetermined indicator in the respective region of the image; and an image output (e.g. GPU 30 and/or AV Port 90) configured to provide the decoded image for output to a display, as described elsewhere herein.

It will be appreciated that the server and client, when operating together, form a codec system implementing the techniques and methods described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of image encoding, comprising the steps of:
during a rendering process for an image, detecting at least a first region within the image having at least a first predetermined property;
logging that predetermined property using a respective predetermined reserved value within a corresponding region of an alpha channel associated with the image; and
encoding the image, wherein
the step of encoding the image comprises, for at least a first region within the image, using one or more encoder settings selected in response to a predetermined reserved value in the corresponding region of the alpha channel.

2. The method of claim 1, in which the step of encoding the image is improved for the at least a first region within the image by using one or more selected encoder settings other than default encoder settings initially provided for the image.

3. The method of claim 1 or claim 2, in which the or each predetermined property relates to a respective image modification that responds differently to encoding than a default or majority image feature type.

4. The method of any one of the preceding claims, in which the or each predetermined property relates to a respective image modification made in response to a user accessibility requirement.

5. The method of claim 4, in which the predetermined property relates to one or more selected from the list consisting of:
i. the range of values in at least a first colour channel are reduced;
ii. a colour range or gamut is altered;
iii. a discontinuity in colour;
iv. a discontinuity in brightness;
v. a discontinuity in contrast; and
iv. an accessibility indicator.

6. The method of any preceding claim, in which one or more predetermined properties relates to a respective property of an image amongst one or more selected from the list consisting of:
i. a region of interest or salience in an image; and
ii. a region being gazed at by a user.

7. The method of any preceding claim, in which one or more predetermined properties relates to a respective property of an image amongst one or more selected from the list consisting of:
i. being rendered;
ii. being sourced from a real-world image;
iii. being animated or in motion;
iv. an inter-image difference of pixel values while not accounting for inter-image motion; and
v. an inter-image difference of pixel values while accounting for inter-image motion.

8. The method of any preceding claim, in which one or more predetermined properties relates to a respective property of an image amongst one or more selected from the list consisting of:
i. the quality of the image region upon decoding; and
ii. an intended degradation of image quality.

9. The method of any preceding claim, in which an image region comprises one or more selected from the list consisting of:
i. a region corresponding to an encoding block;
ii. a set of one or more pixels that corresponds to one alpha channel pixel;
iii. an object depicted in the image; and
iv. a region corresponding to a modification.

10. The method of any preceding claim, in which the step of encoding the image comprises incorporating within the encoded image data, for one or more regions, one or more predetermined indicators of selectable changes to decoder settings.

11. An image encoded according to the method of any one of the preceding claims.

12. An encoded image according to claim 11, incorporating therein for one or more regions one or more predetermined indicators of selectable changes to decoder settings.

13. A method of image decoding, comprising the steps of:
receiving an image encoded according to the method of claim 1,
detecting for one or more regions of the image one or more predetermined indicators of selectable changes to decoder settings;
selecting one or more changes to decoder settings in response to the or each detected predetermined indicator in the respective region of the image.

14. A computer program comprising computer executable instructions adapted to cause a computer system to perform the method of any one of the preceding claims.

15. A server, comprising:
a renderer for rendering an image;
a detection processor configured to detect, during the rendering of the image, at least a first region within the image having at least a first predetermined property;
a logging processor configured to log that predetermined property using a respective predetermined reserved value within a corresponding region of an alpha channel associated with the image; and
an encoder configured to encode the image, wherein
the encoder is configured to, for at least a first region within the image, use one or more encoder settings selected in response to a predetermined reserved value in the corresponding region of the alpha channel.

16. A client device, comprising:
a receiver configured to receive an image encoded by the server of claim 15;
a detection processor configured to detect, for one or more regions of the encoded image, one or more predetermined indicators of selectable changes to decoder settings;
a decoder, configured to select one or more changes to decoder settings in response to the or each detected predetermined indicator in the respective region of the image; and
an image output configured to provide the decoded image for output to a display.
